# EUROPEAN PATENT APPLICATION

(11) **EP 4 407 583 A1**
(43) Date of publication of application: **31.07.2024**
(21) Application number: 23153535.2
(22) Date of filing: 26.01.2023
(51) Int. Cl.: G08G 1/01, G01C 21/34, G08G 1/0967, G08G 1/16, G01C 21/00

(54) **SAFETY SYSTEM FOR A VEHICLE FOR PROTECTING A VEHICLE OCCUPANT AND WILDLIFE, TRAINING MODULE, VEHICLE COMPRISING A SAFETY SYSTEM, USE OF SAFETY SYSTEM AND COMPUTER-IMPLEMENTED METHOD USING A SAFETY SYSTEM IN A VEHICLE**

(71) Applicant: Volvo Car Corporation, 405 31 Göteborg (SE)
(72) Inventor: GIBANICA, Mladen, 40531 Göteborg (SE); ANDERSSON, Jonas, 40531 Göteborg (SE); BÁLINT, András, 40531 Göteborg (SE); GELLERMAN, Daniel, 40531 Göteborg (SE); ZHANG, Xin, 40531 Göteborg (SE); PETERSSON, Ellen, 40531 Göteborg (SE)
(74) Representative: Maiwald GmbH

(57) **Abstract**

The disclosure relates to a safety system (100) for a vehicle (20) of a fleet (10), a training module (125), a vehicle, the use of a safety system, a computer-implemented method and a computer program element. The safety system comprises at least one sensor (110), which is configured to detect a first data set of an animal (50) and/or a second data set of the vehicle and/or of a surrounding area of the vehicle, a data processing unit (120), which is configured to receive and analyse the first and/or second data sets and to determine and/or predict a characteristic data set comprising a probability of a presence of the animal at a location along a driving route of the vehicle based on an analysing and predicting model, and a control unit (150), which is configured to actuate an action of the vehicle based on the characteristic data set of the animal.

## Description

The present disclosure relates to a safety system for a vehicle of a fleet, a training module comprising a data processing unit of a safety system for a fleet, a vehicle in a fleet comprising a safety system, the use of a safety system in a vehicle of a fleet, a computer-implemented method by means of a safety system for a vehicle of a fleet and a computer program element.

Collisions with animals are potentially deadly for animals and drivers and occupants of vehicles, for example autonomous vehicles. Traditional solutions for avoiding animal crashes include traffic signs warning the drivers of the higher risks of vehicle-to animal encounters. These signs are static and do not consider changes such as temporary or seasonal changes in the location and behavior of animals. Also, such signs may limit the use for driving with limited or without human involvement.

Current accident avoiding system of the vehicles rely typically on real-time detection of wildlife for reactive measures. In order to improve the performance and the efficiency of such systems, new technologies need to be developed, for example, to increase the limited duration from detecting the animal for activating the accident avoiding system, since too short timespans at high driving speed may lead to dangerous traffic situations or even crashes with personal injury or property damage.

It is an objective of the present disclosure to provide an improved wildlife tracking and monitoring system for a vehicle.

The problem is at least partially solved or alleviated by the subject matter of the independent claims of the present disclosure, wherein further examples are incorporated in the dependent claims.

According to a first aspect, there is provided a safety system for a vehicle of a fleet. The safety system comprises at least one sensor, a data processing unit and a control unit. The at least one sensor is configured to detect a first data set of an animal, which comprises an attribute data set of the animal. Further, the at least one sensor is configured to detect a second data set of the vehicle and/or of a surrounding area of the vehicle.

The data processing unit is configured to receive and analyse the first data set and/or the second data set and, based on the first data set and/or the second data set, to determine and/or predict a characteristic data set that comprises a probability of a presence of the animal at a location along a driving route of the vehicle based on an analysing and predicting model.

Additionally, the control unit of the safety system is configured to actuate an action of the vehicle based on the characteristic data set of the animal.

The safety system for the vehicle may be an integrated vehicle safety system. The safety system may be provided to map, track and predict the population and movement of the wildlife, such as deer, moose, foxes, by determining and/or predicting the probability of the presence of the wildlife to be high as early as possible to prevent a vehicle-to-animal encounter or a vehicle-to-animal collision. As such, the safety system may be designed to be an active protecting system or an active accident avoiding system. Compared to a conventional passive system of the vehicle, which may reduce the damage to the vehicle when a collision occurs, the active safety or protecting system may warn the driver or send an electric signal to actuate the brake or steer system of the vehicle autonomously well in advance, trying to avoid or mitigate the collision. The active system may allow but not limited by acting on instantaneous information in the field of vision and/or sensing of the vehicle.

For example, the attribute data set of the animal of the first data set may comprise a shape, a posture, a velocity, an approximate vector of movement and/or an acceleration of the animal, which may the characterising features depending on the animal type. Hence, the attribute data set of the animal may be configured to allow determining the presence and the type of the animal.

In an example, the at least one sensor may be at least partially directed to an exterior of the vehicle. The at least one sensor may comprise an image sensor, a camera, a light detection and ranging (LIDAR) sensor, a motion sensor and/or a radar sensor. For example, the at least one sensor may be an exterior-facing camera, which may be integrated in the vehicle.

For example, the at least one sensor may comprise the camera for capturing the shape and the movement of the animal and a position or motion sensor for detecting the location or the driving speed of the vehicle.

In an example, the second data set detected by the at least one sensor may be a parameter data set of the vehicle and/or the surrounding area of the vehicle. The parameter data set may comprise one or more data from a group of data of a driving time, a location of the vehicle, a weather condition surrounding the vehicle, a road speed limit of the driving route, a presence of a wildlife-related traffic sign, a road noise level, an air quality indicator, an environmental type, a presence of a fence, an amount of traffic along the driving route of the vehicle.

As the at least one sensor such as the camera may be integrated in the vehicle, for example, at an outer surface of the vehicle chassis, the at least one sensor may be configured to capture the animal, the road downstream of the driving route and/or the surrounding area of the vehicle, for example, in real-time or at a predefined time interval at various locations. In other words, the camera may be configured to provide information of the first data set of the animal, for example, the shape and motion of the animal, and simultaneously to provide information of the second data set of the vehicle and/or the surrounding area of the vehicle, for example, the country or city name at the current location, the environment such as the weather conditions or the traffic signs at the current location.

In an example, the characteristic data set may further comprise one or more data from a group of a type of the animal, the presence of the animal at the location, a population of the animal, a movement of the animal, a direction of the animal and/or a probability of a vehicle-to-animal encounter.

The characteristic data set may be determined and/or predicted as a result of the first data set of the animal and the second data set of the vehicle and/or the surrounding area of the vehicle, by using the data processing unit comprising the analysing and predicting model. For example, a high probability, for example 90 %, of the presence of the animal or the high probability of a vehicle-to-animal encounter may be predicted, when the camera of the safety system is able to capture the characterising shape and the motion velocity or vector of the animal and to detect a traffic sign indicating the current location in a wildlife protection zone.

In an example, the safety system may comprise a communication unit, which may be configured to transmit the first data set, the second data set and/or the characteristic data set to an external device, and/or to receive a second characteristic data set of a second vehicle of the fleet from the external device.

In an example, the external device may be a mobile terminal, a server, a second communication module of a second vehicle of the fleet, a cloud system and/or a satellite.

The fleet may comprise a plurality of vehicles, for example, the vehicle and a second vehicle. The at least one sensor may be provided for each of the plurality of vehicles, so that the safety system may allow each individual vehicle detecting the respective first and second data sets and/or determining the respective characteristic data sets at the respective locations. The safety system may further allow the plurality of vehicles of the fleet communicating with each other, for example, via the external device or the cloud system, so that a global analysing and predicting model may be continuously improved and updated for accurately and efficiently estimating the wildlife population and movement at various locations.

For example, the shape of the animal captured by the camera and the location of the vehicle detected by the position sensor of the vehicle may be evaluated by the data processing unit and result in that the presence of the animal at the location corresponding to the characteristic data set may be determined. Accordingly, the characteristic data set may further be used to modify the analysing and predicting model of the safety system and result in an increase of the probability of the presence of an animal at the various locations for the plurality of vehicles of the fleet. For example, if the presence and the approximate vector of movement of the animal at the location are determined by the plurality of the vehicles of the fleet, the population and the movement of the animal may be updated for the whole fleet.

Hence, the analysing and predicting model used for determining and predicting the wildlife population and movement may be designed to be a global type, for example, a general model for the whole planet, and/or comprise separate submodels, for each country or isolated areas of nature separated by road networks. The separate submodels (divide-and-conquer) approach may have the advantage that each model may be trained individually and in parallel. This may require estimates of the number of the animals crossing such barriers or roads for accurate predictions. The road networks may essentially describe a boundary condition that may be fed into a smaller area-based modus of a map.

With the up-to-date global analysing and predicting model, the safety system or the active avoidance system may be further optimised, since the users such as the drivers and the occupants of the vehicle may be alerted by the analysing and predicting model well in advance of any possible wildlife movement nearby. As such, the data sets from the safety system of the vehicle may complement the static traffic signs warning for the wildlife that may provide a general indication but may lack temporal information, such as the exact time and/or date of the presence of the animal, and may be updated very seldom. Advantageously, by continuously and timely improving the analysing and predicting model of the data processing unit, the temporary or seasonal changes of the animal population and movement at the locations and the animal behaviours may be determined, updated and predicted.

In an example, the data processing unit may be configured to modify and/or train, at a predefined time interval, the analysing and predicting model based on the characteristic data set of the vehicle and/or the second characteristic data set of the second vehicle for the fleet by prioritising or weighting the first characteristic data set and the second characteristic data set.

For example, the analysing and predicting model may be a predefined statistical or dynamical model that may be built from the object detection algorithms and further recorded feature parameters such as a time, a location, or other parameters. Alternatively, the analysing and predicting model may be a neural network-based model or another machine learning model.

The analysing and predicting model may be provided in the safety system of the vehicle. Alternatively, the analysing and predicting model may be provided in the remote server or in the cloud system. By using the detected and collected data sets from the plurality of vehicles of the fleet, the analysing and predicting model may allow predicting the wildlife population and movement. In this way, the safety system may enhance current active safety solutions relying on information from the local area, with information of a greater area and/or of a lower fidelity and global indicators provided by both the safety system and the existing static traffic signs. The predictions may be feedback into the active safety systems to increase the time window of the responsive action.

With the at least one sensor provided for each of the plurality of the vehicles, such as the vehicle and the second vehicle, in the fleet, the first data set and the second data set from the at least one sensor of each individual vehicle of the fleet may be detected, received, collected or gathered at various locations during driving along the respective driving route. The collected first and second data sets may be analysed and evaluated by the data processing unit of the safety system for each individual vehicle to estimate and update the characteristic data set for the respective vehicle along the driving route. As such, the characteristic data set may be determined for the vehicle of the fleet and a second the characteristic data set may be determined for the second vehicle of the fleet.

In an example, the safety system may further comprise an interface, which may be configured to display the characteristic data set and/or the second characteristic data set on a navigation map.

The interface may be an on-board user interface which may configured to allow an interactive communication between the vehicle control system and the driver or the occupant while driving. The interface may comprise a display, which may be a touchscreen display and configured to visualize a navigation map in a switchable modus. As such, the safety system may be designed to be a computer vision system.

The information comprising the characteristic data sets from the vehicle, the second vehicle and the further vehicles of the fleet may be presented or displayed for the users such as the drivers and the occupants of the vehicles on the live map, in particular the wildlife-indicated navigation map on the display of the interface of the vehicle and/or a mobile phone display, in order to allow the users to identify and predict the wildlife presence and activity with a high probability nearby. As such, the safety system may be configured to allow avoiding roads and routes with a high probability of the wildlife movement.

In an example, the interface may comprise an indicator, which may be configured to indicate the characteristic data set and/or the second characteristic data set in an area-based modus and/or in a route-based modus.

The indicator may be a label, an arrow, a mark, or a mask layer in colour.

The characteristic data sets of the wildlife at the various locations may be collected from the plurality of vehicles of the fleet, displayed on the interface and labelled with the indicators. The area-based modus and the route-based modus may be designed to be switchable manually or autonomously, for example at a predefined time interval. For example, in the area-based modus, a live map may allow displaying the detected wildlife population with a mark-indicator and the wildlife movement with an arrow-indicator of the characteristic data sets collected from the plurality of vehicles of the fleet. The arrow of the mark-indicator may indicate the movement vector between subsequent detections. The size of the mark-indictor may indicate the frequency or the appearance times of the animal at one or more locations within a predefined time interval, for example, the time since the last detection. The colour of the mark-indicator may indicate a time of the presence of the animal detected by the camera of the safety system. For example, the mark-indicator in yellow may correspond to the detection of the animal a predefined time ago, while the mark-indicator in red may correspond to the detection of the animal very recently, for example within the last three days, and the indicator in green may correspond to the prediction of the appearance of the animal and/or a certain probability of the presence, such as the probability of greater than 90 %.

Alternatively, in the area-based modus, the live navigation map may be provided by means of the model output for displaying the planned driving route with the mask layer indicator that may show the habitat of the wildlife for a selected area around the planned route. In the map, the driving route may be highlighted and designed to comprise one or more boundaries of one or more local model areas that are labelled by one or more patterned mask layers and/or one or more mask layers in colours. For example, the mask layer indicator may be designed to be a mask layer comprising dashed lines, in order to indicate the habitat of the wildlife or the areas or the locations where the probability of the presence of the animal is determined and/or predicted to reach or exceed a predefined limit value. Alternatively or additionally, the area with the mask layer in red may indicate the presence of more wildlife than the area with the mask layer in lighter red or in a different colour.

In contrast, in the route-based modus, the navigation map may allow indicating or labelling the driving routes and/or one or more locations along the driving route in a colour, for example in red, if a certain probability of the presence and/or movement of the animal and/or a certain probability of the vehicle-to-animal encounter or collision is determined and/or predicted to reach or exceed a predefined limit value. At the locations where the probability of the presence and movement of the animal and/or the probability of the vehicle-to-animal encounter or collision may be determined and/or predicted to be less than the predefined limit value, but within a predefined value range, the indicator may be provided in a different colour, for example in lighter red, to indicate that the locations may correspond to uncertainty regions or areas for the habitat of the wildlife.

In an example, the control unit may be configured to actuate the action by limiting the driving speed, modifying a light brightness, generating a warning signal to the vehicle and/or the fleet, changing the driving route for the vehicle and/or the second vehicle of the fleet.

As the results of the detection of the safety system by using the at least one sensor, the characteristic data set of the vehicle may be presented to the driver and the occupant of the vehicle to assist them to decide on planning a driving route manually or to assist route planning algorithms to avoid or down-prioritize routes with a high probability of the presence or movement of the wildlife. Alternatively or additionally, taking the probability of the vehicle-to-animal encounter or collision into account, a travel speed may be recommended and/or a speed-related warning may be initiated depending on the characteristic data set of the vehicle.

The performed action may change the driving behaviour of the drivers and further change the wildlife behaviour. For example, the action of changing the driving route for avoiding the route with a high animal activity having a high probability of the presence and movement may increase the probability of further wildlife activity on such routes. The safety system for the fleet may be able to handle such feedback loops by, for example, considering the change in the frequency of observations to adjust the predicted probability of wildlife activity.

According to a second aspect, there is provided a training module that comprises a data processing unit for a safety system according to the present disclosure for protecting a vehicle occupant and wildlife.

In general, relatively small amounts of the data sets are transmitted to and from the plurality of vehicles. The analysing and predicting model may be trained in the cloud system and updated in real-time as new data sets, for example time-series data with several feature parameters with a relatively low sampling time, may come in to predict the wildlife population and movement in seconds, minutes, hours, or days in advance. A compressed-sensing method may also be used to sample randomly for even more efficient data transmissions. For example, it may be provided that only local data sets need to be transmitted back to the car, indicating for example the probability of the vehicle-to-animal encounter in the vicinity or, more generally, at the present location or on the way at certain locations along the planned driving route towards the current or planned destination. The results of the characteristic data sets from the model may further be transmitted to the vehicle or sent to a global centralized server or the cloud system that each vehicle of the fleet may access the latest results from. The model predictions may be integrated then into the safety system (such as the vehicle-based navigation system or the active protecting system), with appropriate weights combining information from current observations of the drivers and the occupants (such as their seating position in the car, signs of distraction/fatigue or other observations) and the output from the safety system indicating the probability of a vehicle-to-animal encounter. The prediction as the model output may be presented to the drivers and the occupants in an interface having an in-vehicle or on-board or mobile phone-based map application to allow the users manually deciding on potential actions or allow autonomously performing the actions.

According to a third aspect, there is provided a vehicle comprising a safety system according to the present disclosure for protecting a vehicle occupant and wildlife.

As the safety system may be provided as an integrated computer vision system installed in the vehicle on-board system, the safety system may allow mapping, tracking and predicting the movement of the wildlife using the exterior-faced sensors, which may be configured to allow sensing and recording, for example, the attribute data set of the first data set of the animal comprising the approximate vector of the movement of the animal in combination of the parameter data set of the second data set of the vehicle and/or the surrounding area thereof comprising the location data of the vehicle. The determined and/or predicted characteristic data set, which may comprise the probability of the presence of the wildlife at a location along the driving route of the vehicle, may be used to predict a potential collision between the vehicle and the animal.

Further, in a fleet that may comprise a plurality of the vehicles, the first and second data sets and/or the estimated characteristic data sets may be collected and aggregated from each of the plurality of vehicles of the fleet and thus be updated in real-time by communicating with the external, remote, or centralized system such as the cloud system. As such, the analysing and predicting model for evaluating wildlife population and movements may remain up to date for the whole fleet, as the collected plenty of data from the plurality of vehicles in the fleet may be used to build and train the model for tracking and estimating the wildlife population and movement in an area. Also, the vehicle occupants and wildlife may be protected by precisely and timely determining and/or predicting a vehicle-animal-encounter and performing the action in response to the determination and/or the prediction.

According to a fourth aspect, there is provided the use of a safety system according to the present disclosure in a vehicle of a fleet according to the third aspect of the present disclosure for preventing a vehicle-to-animal encounter and/or planning a driving route.

The information determined and/or predicted from the first and second data sets and the characteristic data set of the safety system of the vehicle in a fleet may in general be useful for the driver and the occupant of the vehicle. In particular, the information may be useful for autonomous vehicles that will not rely at all or very little on the user intervention. Further, the analysing and predicting model of the safety system may facilitate or greatly simplify the processing of the sensory information comprising the first and second data sets of the autonomous driving (AD) system of the vehicle and thus allow predicting wildlife behavior and performing the responsive actions, for example suggesting an alternative route instead of the planned driving route with a high probability of the presence of the wildlife, adjusting or slowing down the driving speed of the vehicle.

Furthermore, the information of the first and second data sets and the characteristic data set of the vehicle may be further provided to research institutes, governments, companies or to the public. For example, such data sets may be valuable for road authorities that are responsible for wildlife signs. These authorities may acquire up-to-date information about the frequency of vehicle-to-animal interactions and may use such data for updating the traffic signs for the public. The information provided by the safety system may also be useful for governments to estimate the biological diversity in certain regions and be used in urban planning.

According to a fifth aspect, there is provided a computer-implemented method by means of a safety system for a vehicle of a fleet according to the present disclosure. The method comprises the following steps: first, detecting, by means of at least one sensor, a first data set of an animal, which comprises an attribute data set of the animal, and/or a second data set of the vehicle and/or of a surrounding area of the vehicle; subsequently, receiving and analysing the first data set and/or the second data set, by means of a data processing unit, and determining and/or predicting, based on the first data set and/or the second data set, a characteristic data set that comprises a probability of a presence of an animal along a driving route of the vehicle based on an analysing and predicting model; finally, actuating an action of the vehicle by means of a control unit based on the characteristic data set of the animal.

Optionally, in order to optimize the analysing and predicting model, the computer-implemented method may further comprise an additional step of modifying and training, at a predefined time interval, the analysing and predicting model based on the characteristic data set of the vehicle and/or a second characteristic data set of a second vehicle for the fleet by prioritising or weighting the first characteristic data set and the second characteristic data set by means of the data processing unit.

According to a sixth aspect, there is provided a computer program element for a safety system according to the present disclosure, which, when being executed by a processing element of a vehicle, is configured to perform the method steps of the fifth aspect.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

Examples of the disclosure will be described in the following with reference to the following drawings.
- Fig. 1: shows schematically an example of a safety system for a vehicle of a fleet according to the present disclosure.
- Fig. 2: shows schematically an example of a fleet comprising a plurality of vehicles according to the present disclosure.
- Fig. 3: shows schematically a flow chart illustrating a computer-implemented method by means of a safety system for a vehicle of a fleet according to the present disclosure.
- Fig. 4a: shows schematically an example of an interface of a safety system according to the present disclosure.
- Fig. 4b: shows schematically an example of a navigation map of an interface of a safety system according to the present disclosure.
- Fig. 4c: shows schematically an example of a navigation map of an interface of a safety system according to the present disclosure.

The figures are merely schematic representations and serve only to illustrate examples of the disclosure. Identical or equivalent elements are in principle provided with the same reference signs.

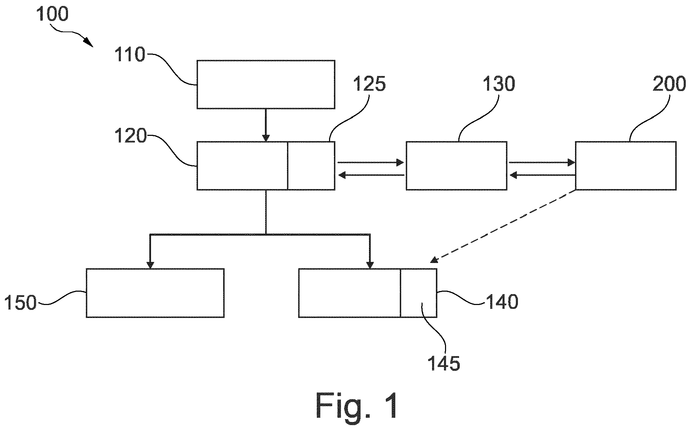

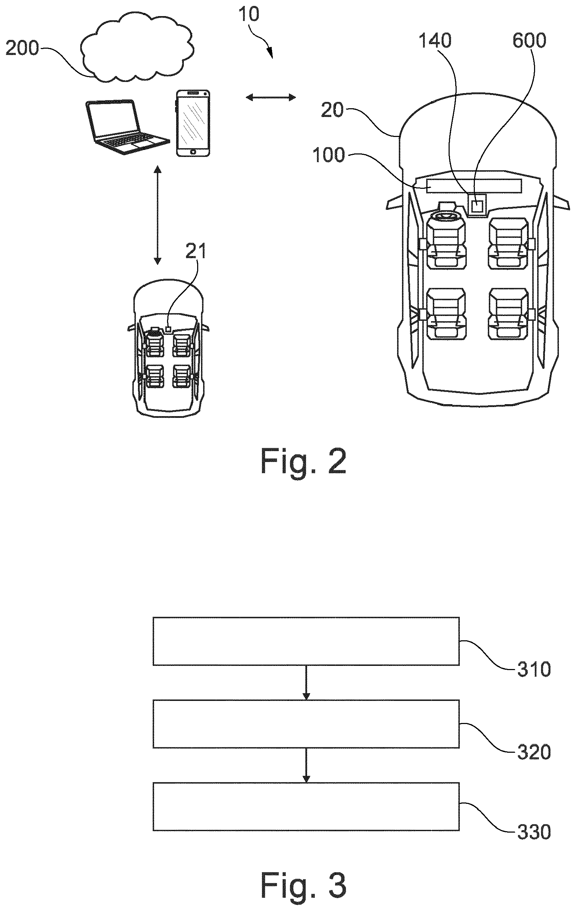

Fig. 1 shows a safety system 100 for a vehicle 20 of a fleet 10 (also shown in Fig. 2). The safety system 100 comprises at least one sensor 110, a data processing unit 120, an interface 140 and a control unit 150.

The at least one sensor 110 may be configured to detect a first data set of an animal, which may comprise an attribute data set of the animal 50 (as shown in Fig. 2). For example, the attribute data set of the animal of the first data set may comprise of a shape, a posture, a velocity, an approximate vector of movement and/or an acceleration of the animal 50.

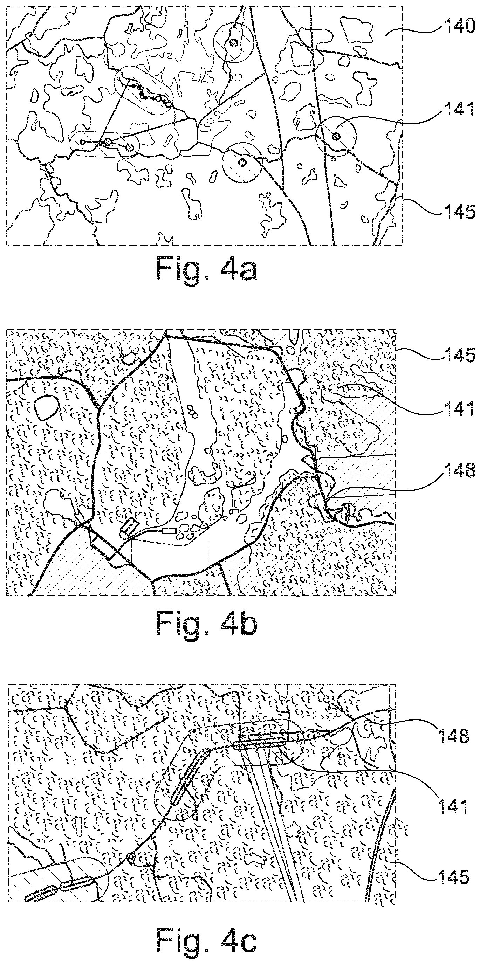

Further, the at least one sensor 110 may be configured to detect a second data set of the vehicle 20 and/or of a surrounding area of the vehicle 20, which may be a parameter data set of the vehicle 20 and/or the surrounding area of the vehicle 20. The parameter data set of the second data set may comprise, for example, one or more data from a group of data of a driving time, a location of the vehicle 20, a weather condition surrounding the vehicle 20, a road speed limit of the driving route 148 (as shown in Fig. 4a, Fig. 4b), a presence of a wildlife-related traffic sign, a road noise level, an air quality indicator, an environmental type, a presence of a fence, an amount of traffic along the driving route 148 of the vehicle 20.

The at least one sensor 110 may comprise an image sensor, a camera, a LIDAR-sensor, a motion sensor and/or a radar sensor and be at least partially directed to an exterior of the vehicle 20. For example, a camera is arranged in or at the outer surface of the chassis of the vehicle, so that the camera may capture one or more images of the road in front the vehicle 20 while travelling along the planned driving route 148 and/or the surrounding area of the vehicle 20. The one or more images may contain images data sets, namely the attribute data set of the animal 50 of the first data set and the parameter data sets of the vehicle 20 and/or the surrounding area thereof of the second data set.

The data processing unit 120 may be configured to receive and analyse the first data set and/or the second data set and, based on the first data set and/or the second data set, to determine and/or predict a characteristic data set, the characteristic data set comprising a probability of the presence of the animal 50 at a location along a driving route 148 of the vehicle 20 based on an analysing and predicting model. The characteristic data set may further comprise one or more data from a group of a type of the animal 50, the presence of the animal 50 at the location, a population of the animal 50, a movement of the animal 50, a direction of the animal 50 and/or a probability of a vehicle-to-animal encounter or a vehicle-to-animal encounter collision. The data processing unit 120 may be provided in a training module 125 for the safety system 100.

The control unit 150 may be configured to actuate an action of the vehicle 20 based on the characteristic data set of the animal 50, for example, by limiting the driving speed, modifying a light brightness, generating a warning signal to the vehicle 20 and/or the fleet 10, changing the driving route 148 for the vehicle 20 and/or the second vehicle 21 of the fleet 10.

For example, if the probability of the presence of an animal 50 at the present location of the vehicle 20 is determined by the data processing unit 120 to be high, since the camera 110 is able to detect a shape of a certain animal 50 from the first data set and/or the presence of a wildlife-protection traffic sign, the control unit 150 may perform the action of limiting the driving speed and/or modifying (e.g., lowering) the light brightness of the vehicle 20. In this way, the driving behaviour at the location is changed, so that the influence on the movement of appeared animal 50 may be minimized. In contrast, if the probability of the presence of an animal 50 at a planned location downstream of the driving route 148 of the vehicle 20 is determined, the control unit 150 may perform the action of sending a warning signal to the driver of the vehicle 20 and altering the driving route 148 to avoid the route with the animal activity.

The vehicle 20, as shown in Fig. 2, may be provided in a fleet 10. In other words, the fleet 10 may comprise a plurality of vehicles, including the vehicle 20 and a second vehicle 21, as well as potential further vehicles. The second vehicle 21 may be configured to provide a second characteristic data set comprising a second probability of the presence of the animal using a second sensor and a second data processing unit arranged in the second vehicle 21.

Fig. 1 and Fig. 2 show, respectively, that the safety system 100 may further comprise a communication unit 130, which may be configured to transmit the first data set, the second data set and/or the characteristic data set to an external device 200, and/or to receive the second characteristic data set of a second vehicle 21 of the fleet 10 from the external device 200. The external device 200 may be a mobile terminal, a server, a second communication module of a second vehicle 21 of the fleet 10, a cloud system and/or a satellite.

The analysing and predicting model 120 may be a predefined statistical model as a function of predefined parameters or a neural network-based model. For example, by using the neural network-based model, the data processing unit 120 may be configured to modify and/or train, at a predefined time interval, the analysing and predicting model based on the characteristic data set of the vehicle 20 and/or the second characteristic data set of the second vehicle 21 for the fleet by prioritising or weighting the first characteristic data set and the second characteristic data set. In this way, the analysing and predicting model may follow machine learning algorithms to continuously optimise the accuracy of the model.

The safety system 100 of Fig. 1 and Fig. 2 further comprises an interface 140, which may be configured to display the characteristic data set of the vehicle 20 and/or the second characteristic data set of the second vehicle 21 of the fleet on a navigation map 145. The interface 140 may comprise a display, such as a touchscreen display.

Further, since the fleet 10 may be configured to collect further characteristic data sets from the plurality of the vehicles of the fleet 10 by means of the cloud system 200, the navigation map 145 may be provided in a form of a wildlife-labeled navigation map 145 which may be configured to visualize, on the display of the interface 140, the probability of the presence of the animal 50 at various locations along the planned driving route 148 and/or the probability of a vehicle-to animal encounter at the various locations.

For example, the interface 140 of the safety system 100 may be configured to visualize the warning signal on the display, in case that the probability of the presence of the animal 50 or the probability of the vehicle-to-animal encounter is determined to exceed a predefined limit value at the location along the driving route 148, so that the action may be performed by the occupant of the vehicle 20 or by the control unit 150 of a self-driving autonomous vehicle 20, in order to protect vehicle occupants and wildlife.

Fig. 4a, Fig. 4b and Fig. 4c show, respectively, the interface 140 and the navigation map 145 of the interface 140 of the safety system 100. The interface 140 may comprise an indicator 141, which may comprise a label, an arrow, a mark, or a mask layer in colour.

The interface 140 may be configured to indicate the characteristic data set and/or the second characteristic data set in an area-based modus and/or in a route-based modus, for example, by means of the model output. Further, the interface 140 may be configured to display the plurality of characteristic data sets of the wildlife detected and collected from the plurality of the vehicles of the fleet 10 on the navigation map 148, which may be updated and received by each individual vehicle such as the vehicle 20 and the second vehicle 21 of the fleet 10.

For example, in Fig. 4a, a live map 145 in the area-based modus shows the detection of wildlife and the movement of the animal 50 detected by the vehicle 20 or the plurality of vehicles of the fleet 10. The indicator 141 may be provided at the locations where the presence of the animal 50 are detected, determined and/or predicted. The size of the indictor 141 may indicate the frequency or the appearance times of the animal 50 at one or more locations within a predefined time interval, for example, the time since the last detection. The colour of the indicator 141 may indicate a time of the presence of the animal 50 detected by the camera 110 of the safety system. For example, the indicator 141 in yellow may correspond to the detection of the animal 50 a predefined time ago, while the indicator 141 in red may correspond to the detection of the animal 50 very recently, for example within the last three days, and the indicator in green may correspond to the prediction of the appearance of the animal 50 and/or a certain probability of the presence, such as the probability of greater than 90 %.

Alternatively or additionally, as shown in Fig. 4b, the live navigation map 145 in the area-based modus may be provided by means of the model output and display the planned driving route 148 with the indicator 141 showing the habitat of the wildlife for a selected area. The driving route 148 may be highlighted and designed to comprise one or more boundaries of one or more local model areas that are labelled by one or more patterned mask layers and/or one or more mask layers in colours. For example, the indicator 141 may be designed to be a mask layer comprising dashed lines, in order to indicate the habitat of the wildlife or the areas or the locations where the probability of the presence of the animal 50 is determined and/or predicted to reach or exceed a predefined limit value. Alternatively or additionally, the area with the mask layer in red may indicate the presence of more wildlife than the area with the mask layer in lighter red or in a different colour.

In contrast to the area-based modus of Fig. 4a and Fig. 4b, the route-based modus in Fig. 4c may be activated on the interface 140, showing the coarser live navigation map 145 with the indicator 141. The navigation map 145 may allow indicating or labelling the driving routes 148 or one or more locations along the driving route 148 in red, if a certain probability of the presence of the animal 50 and/or a certain probability of the vehicle-to-animal encounter or collision is determined and/or predicted to reach or excess a predefined limit value. At the locations where the probability of the presence of the animal 50 and/or the probability of the vehicle-to-animal encounter or collision may be determined and/or predicted to be less than the predefined limit value, but within a predefined value range, the indicator 141 may be provided in lighter red for indicating that the locations may correspond to uncertainty regions or areas for the habitat of the wildlife.

The area-based modus of Fig. 4a and Fig. 4b and the route-based modus Fig. 4c may be able to be switched or activated manually via the touchscreen of the interface 140 by the driver of the vehicle 20 or automatically.

Fig. 3 shows a flow chart illustrating a computer-implemented method by means of a safety system 100 for a vehicle 20 of a fleet 10 for protecting vehicle occupants and wildlife while driving.

The method starts at step 310 where a first data set of an animal 50, that may comprise an attribute data set of the animal, and/or a second data set of the vehicle 20 and/or of a surrounding area of the vehicle 20 may be detected by means of the at least one first sensor 110. At a subsequent step 320, the first data set and/or the second data set may be received and analysed, by means of a data processing unit 120, and, based on the first data set and the second data set, a characteristic data set, which may comprise a probability of a presence of the animal at various locations along the driving route of the vehicle, may be determined and/or predicted, based on an analysing and predicting model. At step 330, an action of the vehicle 20 may be actuated by means of a control unit 150 based on the characteristic data set of the animal 50.

The analysing and predicting model may be pre-stored in the data processing unit 120 of the safety system 100. Alternatively, the analysing and predicting model may be a neutral network-based model. Accordingly, for example, the method may comprise a further step where the analysing and predicting model may be modified and/or trained at a predefined time interval based on the characteristic data set of the vehicle 20 and/or a second characteristic data set of a second vehicle 21 for the fleet 10 by prioritising or weighting the first characteristic data set and the second characteristic data set by means of the data processing unit 120.

Using the analysing and predicting model of the data processing unit 120, the safety system may be able to map, track and/or predict wildlife movement by detecting the respective data sets of the animals such as deer, moose, foxes etc.,

Fig. 2 shows that the safety system 100 further comprises a processing element 600 for executing by a computer program element for a safety system, which may be configured to perform the above described method steps.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: fleet
- 20: vehicle
- 21: second vehicle
- 50: animal
- 100: safety system
- 110: at least one sensor
- 120: data processing unit
- 125: training module
- 130: communication unit
- 140: interface
- 141: indicator
- 145: navigation map
- 148: driving route
- 150: control unit
- 200: external device
- 310: step of detecting first data set and/or second data set
- 320: step of receiving and analysing first data set and/or second data set
- 330: step of actuating action of vehicle
- 600: processing element

## Claims

1. A safety system (100) for a vehicle (20) of a fleet (10), comprising:
at least one sensor (110),
a data processing unit (120), and
a control unit (150);
the at least one sensor (110) being configured to detect a first data set of an animal (50), the first data set comprising an attribute data set of the animal (50), and/or the at least one sensor (110) being configured to detect a second data set of the vehicle (20) and/or of a surrounding area of the vehicle (20);
the data processing unit (120) being configured to receive and analyse the first data set and/or the second data set and, based on the first data set and/or the second data set, to determine and/or predict a characteristic data set, the characteristic data set comprising a presence of the animal (50) at a location along a driving route (148) of the vehicle (20) based on an analysing and predicting model; and
the control unit (150) being configured to actuate an action of the vehicle (20) based on the characteristic data set of the animal (50).

2. The safety system (100) according to claim 1,
the at least one sensor (110) being at least partially directed to an exterior of the vehicle (20); and
the at least one first sensor (110) comprising an image sensor, a camera, a LIDAR-sensor, a motion sensor and/or a radar sensor.

3. The safety system (100) according to claim 1 or 2,
the second data set being a parameter data set of the vehicle (20) and/or the surrounding area of the vehicle (20);
the parameter data set comprising one or more data from a group of data of a driving time, a location of the vehicle (20), a weather condition surrounding the vehicle (20), a road speed limit of the driving route (148), a presence of a wildlife-related traffic sign, a road noise level, an air quality indicator, an environmental type, a presence of a fence, an amount of traffic along the driving route (148) of the vehicle (20).

4. The safety system (100) according to one of the preceding claims,
the characteristic data set further comprising one or more data from a group of a type of the animal (50), the presence of the animal (50) at the location, a population of the animal (50), a movement of the animal (50), a direction of the animal (50) and/or a probability of a vehicle-to-animal encounter.

5. The safety system (100) according to one of the preceding claims, further comprising:
a communication unit (130);
the communication unit (130) being configured to transmit the first data set, the second data set and/or the characteristic data set to an external device (200), and/or to receive a second characteristic data set of a second vehicle (21) of the fleet (10) from the external device (200).

6. The safety system (100) according to claim 5,
the external device (200) being a mobile terminal, a server, a second communication module of a second vehicle (21) of the fleet (10), a cloud system and/or a satellite.

7. The safety system (100) according to claim 5 or 6,
the data processing unit (120) being configured to modify and/or train, at a predefined time interval, the analysing and predicting model based on the characteristic data set of the vehicle (20) and/or the second characteristic data set of the second vehicle (21) for the fleet (10) by prioritising or weighting the first characteristic data set and the second characteristic data set.

8. The safety system (100) according to one of the claims 5 to 7, further comprising:
an interface (140);
the interface (140) being configured to display the characteristic data set and/or the second characteristic data set on a navigation map (145).

9. The safety system (100) according to claim 8,
the interface (140) comprising an indicator (141);
the indicator (141) being configured to indicate the characteristic data set and/or the second characteristic data set in an area-based modus and/or in a route-based modus.

10. The safety system (100) according to one of the preceding claims,
the control unit (150) being configured to actuate the action by limiting the driving speed, modifying a light brightness, generating a warning signal to the vehicle (20) and/or the fleet (10), changing the driving route (148) for the vehicle (20) and/or the second vehicle (21) of the fleet (10).

11. A training module (125) comprising a data processing unit (120) for a safety system (100) according to one of the claims 1 to 10 for a fleet (10) comprising at least one vehicle (20, 21) for protecting a vehicle occupant and wildlife.

12. A vehicle (20) in a fleet (10) comprising a safety system (100) according to one of the claims 1 to 10 for protecting a vehicle occupant and wildlife.

13. Use of a safety system (100) according to one of claims 1 to 10 in a vehicle (20) of a fleet (10) according to claim 12 for preventing a vehicle-to-animal encounter and/or planning a driving route (148).

14. A computer-implemented method by means of a safety system (100) for a vehicle (20) of a fleet (10), the method comprising the steps of:
detecting (310) a first data set of an animal by means of at least one sensor (110) and/or detecting a second data set of the vehicle (20) and/or of a surrounding of the vehicle (20) by means of the at least one sensor (110), the first data set comprising an attribute data set of the animal (50);
receiving and analysing (320) the first data set and/or the second data set, by means of a data processing unit (120), and determining and/or predicting, based on the first data set and/or the second data set, a characteristic data set, the characteristic data set comprising a probability of a presence of the animal (50) along a driving route (148) of the vehicle (20) based on an analysing and predicting model;
actuating (330) an action of the vehicle (20) by means of a control unit (150) based on the characteristic data set of the animal (50);
modifying and training, at a predefined time interval, the analysing and predicting model based on the characteristic data set of the vehicle (20) and/or a second characteristic data set of a second vehicle (21) for the fleet (10) by prioritising or weighting the first characteristic data set and the second characteristic data set by means of the data processing unit (120).

15. A computer program element, for a safety system (100) according to any of claims 1 to 10, which, when being executed by a processing element (600) of a vehicle (20), being configured to perform the method steps of the method claim 14.
